# EUROPÄISCHE PATENTSCHRIFT

(11) **EP 2 326 521 B1**
(45) Veröffentlichungstag und Bekanntmachung des Hinweises auf die Patenterteilung: **29.10.2014**
(21) Anmeldenummer: 09782515.2
(22) Anmeldetag: 02.09.2009
(51) Int. Cl.: B60J 7/00

(54) **BESCHATTUNGSVORRICHTUNG FÜR EINE KOPFWAGEN-FRONTSCHEIBE**
SHADING DEVICE FOR A CARRIAGE WINDSHIELD
DISPOSITIF D'OMBRAGE POUR VITRE AVANT DE WAGON DE TÊTE

(30) Priorität: 23.09.2008 DE 102008048565
(43) Veröffentlichungstag der Anmeldung: 01.06.2011
(73) Patentinhaber: Siemens Aktiengesellschaft, 80333 München (DE); GVE Viehbeck Engineering + Systemtechnik GmbH, 91522 Ansbach (DE)
(72) Erfinder: BARTHA, Michael, 91578 Leutershausen (DE); COMSA, Elisabeta-Mihaela, 46049 Oberhausen (DE)
(86) Internationale Anmeldenummer: PCT/EP2009/061346
(87) Internationale Veröffentlichungsnummer: WO 2010/034598

(56) Entgegenhaltungen:
- EP-A- 1 731 341
- EP-A- 1 803 599
- DE-A1- 19 801 170
- DE-U1-202004 018 915
- US-A- 5 720 508

## Beschreibung

Die Erfindung bezieht sich auf eine Beschattungsvorrichtung für eine Frontscheibe eines Schienenfahrzeug-Kopfwagens noch dem Oberbegriff von Anspruch 1.

Eine solche Beschattungsvorrichtung ist beispielsweise aus der US 5,720,508 benannt.

Moderne Hochgeschwindigkeitszüge sind durch eine windschnittige Form des Kopfwagens und entsprechend gewölbte Frontscheibe oft sehr problematisch abzudunkeln. Die massive Sonneneinstrahlung und die Blendwirkung, die bei diesen oft in sehr flachen Winkeln angeordneten Frontscheibe entstehen, müssen aber aufgrund des entscheidenden Sicherheitsfaktors für einen Zugführer konsequent abgehalten werden.

Bisher wurden zur Abschattung der Frontscheibe eines Kopfwagens manuell oder elektrisch angetriebene Verrichtungen verwendet, die ein, zwei oder sogar drei Stoffrollos im Verbund aufweisen und - in einem mehr oder weniger größen Abstand zur Frontscheibe - eine Blendwirkung der Sonne unterbinden. Bei der ICE-3-Baureihe der Deutschen Bahn kam erstmals eine Sonnenblende zum Einsatz, die bereits einen nichtlineare, kurvenförmigen Verlauf hat. Dies wurde durch entsprechende Artikulationen bewerkstelligt. Diese Einrichtung erreicht aber sehr schnell ihre Grenzen, da sie nicht beliebig erweiterbar ist, was einen Verfahrweg und eine Scheibenkrümmung angelangt. Zudem werden hier als Beschattungsmedium Stoffrollos verwendet, welche bauartbedingte Nachteile halben. Solche Nachteile liegen in erster Linie in der Empfindlichkeit gegenüber mechanischen Belastungen, was zu einem Ausfransen im Radbereich, einem Knittern und einem Verzug der Stoffrollos führen kann. Auch können sich optische Mängel ergeben, die betriebsbedingt sind, beispielsweise Faltenwurf, Verschmutzung, Verklebung usw..

Ausgehend hiervon liegt der Erfindung die Aufgabe zugrunde, eine Beschattungsvorrichtung für eine Frontscheibe eines Kopfwagens bereitzustellen, bei der die zugehörige Sonnenblende nahe der Frontscheibe verläuft, wobei insbesondere einer vorgegebenen Krümmung der Frontscheibe in Längsrichtung und Querrichtung Rechnung getragen werden kann.

Diese Aufgabe wird bei der eingangs genannten Beschattungsvorrichtung mit den Merkmalen des kennzeichnenden Teils von Anspruch 1 gelöst.

Gemäß der Erfindung werden somit keine Stoffrollos eingesetzt sondern eine allgemein plattenförmige Sonnenblende. Z. B. aus GFK. Diese ist mittels mehrerer Radialführungen aus einer Ausgangsstellung in eine Beschattungsstellung verfahrbar. Damit entfallen insbesondere sämtliche bauartbedingten Nachteile der im Stand der Technik bekannten Stoffrollos.

Bevorzugt sind von den drei Radialführungen bezüglich des Rahmenaufbaus zwei fest und eine mitfahrend ausgeführt. Dabei ist die mittlere Radialführung typischer Weise angetrieben, so dass die Sonnenblende zwischen den beiden Stellungen verfahren werden kann.

Bevorzugt sind die beiden äußeren Radialführungen fest und die mittlere mitfahrend ausgeführt. Die beiden äußeren Radialführungen können jeweils Führungsstäbe aufweisen, an denen die Sonnenblende jeweils lageeinstellbar aufgehängt ist. Dies gestattet es, dass ggf. auch dreidimensional Geometrieabweichungen der Sonnenblende ausgeglichen werden können.

Es kann vorgesehen sein, dass der Rahmenaufbau zur parallelen Ausrichtung der äußeren Führungsstäbe im Wesentlichen senkrecht zu der Sonnenblende wirkende, höheneinstellbare Anschläge aufweist.

Ausführungsbeispiele der Erfindung werden nachfolgend unter Bezugnahme auf die Zeichnungen noch näher erläutert. Es zeigen:
- Figur 1: eine perspektivische Ansicht von oben einer Beschattungsvorrichtung für eine Frontscheibe eines Kopfwagens,
- Figur 2: eine perspektivische Ansicht von unten der Beschattungsvorrichtung von Figur 1,
- Figur 3: eine Detailansicht einer Einzelheit "X" von Figur 1 und
- Figur 4: eine Detailansicht einer Einzelheit "Y" von Figur 1.

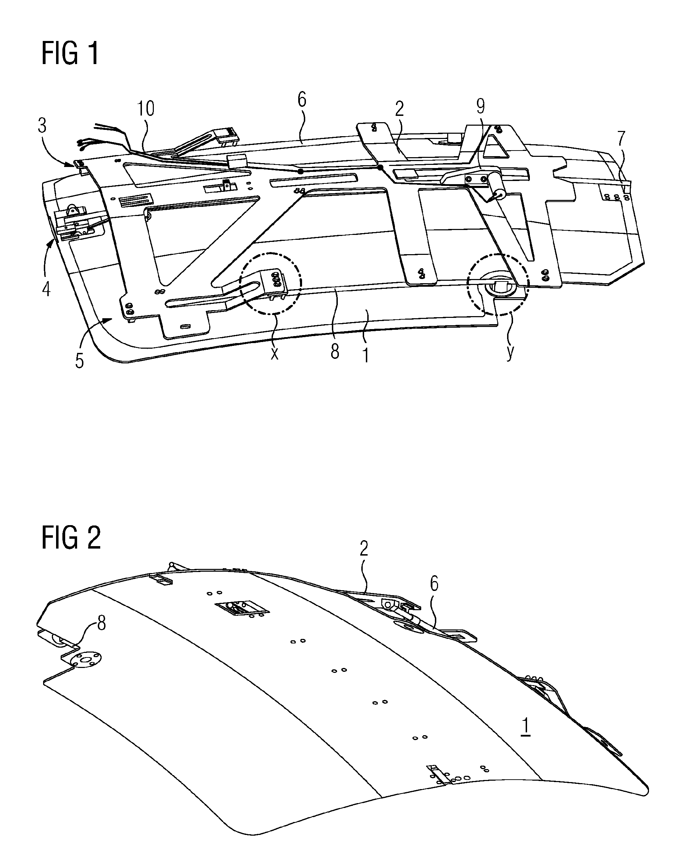

In Figur 1 ist der allgemeine Aufbau einer Beschattungsvorrichtung für eine Frontscheibe eines Kopfwagens eines Schienenfahrzeugs dargestellt. Eine Sonnenblende 1 wird von einem Rahmenaufbau 2 getragen. Die Sonnenblende 1 befindet sich bei der Darstellung von Figur 1 unterhalb des Rahmenaufbaus 2. Zum Ausfahren der Sonnenblende 1 wird diese in Figur 1 nach links bewegt, während der Rahmenaufbau 2 seine Position beibehält.

Die Sonnenblende 1 ist gegenüber dem Rahmenaufbau 2 mit Hilfe von drei Radialführungen 3, 4, 5 geführt. Jede der Radialführungen 3, 4, 5 umfasst einen zugehörigen Führungsstab 6, 7, 8.

Die beiden äußeren Führungsstäbe 6, 8 sind mit dem Rahmenaufbau 2 fest verbunden, wobei beide Enden der Führungsstäbe 6, 8 über geeignete Befestigungseinrichtungen an dem Rahmenaufbau 2 fixiert sind.

Der mittlere Führungsstab 7 ist mit der Sonnenblende 1 fest verbunden und somit mitfahrend ausgebildet, d. h., wenn die Sonnenblende 1 ausgefahren wird, bewegt sich der Führungsstab 7 mit.

Das hintere Ende des Führungsstabs 7 ist über eine geeignete Befestigungseinrichtung am hinteren Ende der Sonnenblende 1 fixiert. Der Führungsstab 7 reicht vom hinteren Rand der Sonnenblende 1 bis zu deren vorderem Rand. Am vorderen Rand der Sonnenblende 1 ist das zugeordnete Ende des Führungsstabs 7 ebenfalls mit einer Befestigungseinrichtung an der Sonnenblende 1 angebracht.

Die Sonnenblende 1 wird mit Hilfe eines elektromotorischen Antriebs 9 zwischen ihrer eingefahrenen und ihrer ausgefahrenen Stellung bewegt. Dem elektromotorischen Antrieb 9 sind Kabelzuleitungen 10 zugeordnet.

Figur 2 zeigt die Beschattungsvorrichtung in einer Ansicht von unten, wobei insbesondere die allgemeine Form der Sonnenblende 1 veranschaulicht wird.

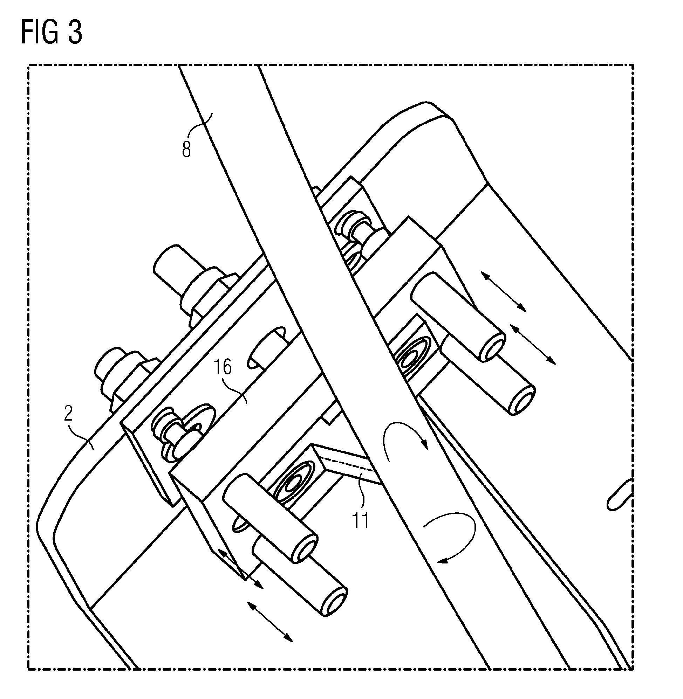

Figur 3 zeigt eine Einzelheit "X" von Figur 1. An einem zugehörigen Halteabschnitt des Rahmenaufbaus 2 ist höheneinstellbar ein Anschlag 10 vorgesehen, wobei die Höheneinstellung mit Hilfe geeigneter Schrauben/Gewinde-Einheiten bereitgestellt wird. Der Anschlag 10 weist einen in Richtung auf die äußere Führungsstange 8 vorstehenden Steg 11 auf, mit dem eine Außenseite des Führungsstabes 8 zur Anlage gelangt.

Da beide äußeren Führungsstangen 6, 8 mit entsprechenden Anschlägen 10 zusammenwirken, lässt sich über die Höheneinstellung der Anschläge 10 eine parallele Ausrichtung der beiden äußeren Führungsstäbe 6, 8 erreichen. Dies bedeutet, dass die Sonnenblende 1 in ausgefahrenem Zustand an beiden Seiten in etwa denselben Abstand zu der abgeschatteten Frontscheibe aufweist.

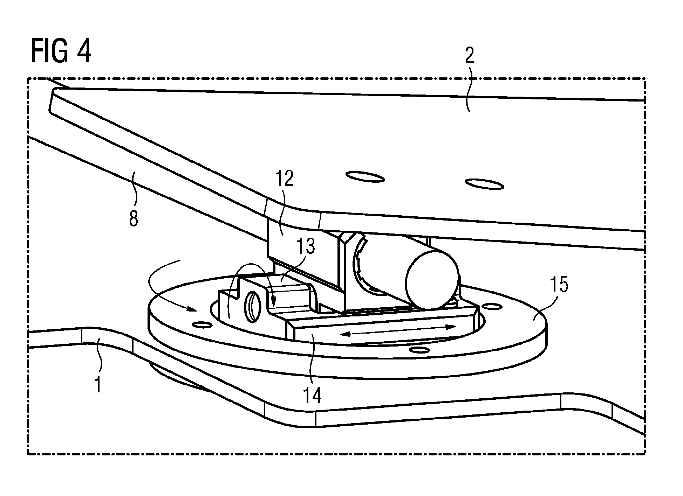

Figur 4 veranschaulicht eine Einzelheit "Y" von Figur 1, insbesondere eine Aufhängung der Sonnenblende 1 an der äußeren Führungsstange 8. Eine funktionsidentische Aufhängung der Sonnenblende 1 an der äußeren Führungsstange 6 ist außerdem vorhanden.

Eine Aufhängeeinrichtung ist derart mehrteilig aufgebaut, dass sich eine dreidimensionale Lageeinstellung für ein die äußere Führungsstange 8 umgreifendes Halteelement 12 ergibt. Das Halteelement 12 ist im Wesentlichen quer zur Sonnenblende 1 entlang einer Nut 13 verschieblich, die in einem Zwischenelement 14 vorgesehen ist. Das Zwischenelement 14 ist um eine Achse in Querrichtung der Sonnenblende 1 drehbar gelagert, so dass Winkelauslenkungen möglich sind. Das Zwischenelement 14 ist wiederum innerhalb eines Halterings 15 gelagert. Der Haltering 15 ist um eine Achse in Normalrichtung der Sonnenblende 1 drehbar im Körper der Sonnenblende 1 gelagert. Insgesamt ergibt sich damit eine dreidimensionale Lageeinstellmöglichkeit für das Halteelement 12 und damit für die relative Lage der Sonnenblende 1 gegenüber dem äußeren Führungsstab 8. Da dieselbe Aufhängung auch für den Führungsstab 6 vorgesehen ist, wird es ermöglicht, dass etwaigen Geometrieabweichungen durch entsprechende Einstellung der Aufhängungen der Sonnenblende 1 an den äußeren Führungsstäben 6, 8 Rechnung getragen werden kann.

Die mittlere Radialführung 4, insbesondere der linear angetriebene mittlere Führungsstab 7 bewegt sich mit der Sonnenblende 1 mit. Der mittlere Führungsstab 7 ist über seine gesamte Länge in Intervallen über Befestigungselemente an der Sonnenblende 1 angebracht.

Der äußere Führungsstab 8 behält in ein- und ausgefahrenem Zustand der Sonnenblende 1 seine Lage gegenüber dem Rahmenaufbau 2 bei. Bei dem Übergang von eingefahrener Stellung zu ausgefahrener Stellung, bewegt sich das Halteelement 12 der Aufhängeeinrichtung entlang der Führungsstange 8 nach vorne, bis eine Endstellung erreicht wird.

Es ist hervorzuheben, dass die Aufbauart der Beschattungsvorrichtung auch eine Notentriegelung ermöglicht, die es gestattet, bei einem Ausfall einer Bordspannung innerhalb kurzer Zeit die Sonnenblende 1 manuell einzufahren.

Außerdem ist darauf hinzuweisen, dass die Sonnenblende 1 beispielsweise aus Glasfaser verstärktem Kunststoff hergestellt sein kann, der die eingangs genannten Nachteile von Stoffrollos nicht aufweist und außerdem sehr hohe Brandschutzanforderungen erfüllt.

Auch gestattet es die Beschattungsvorrichtung, eine sehr geringe Bauraumhöhe zu realisieren, was zu einem Erweitern eines Sichtbereichs eines Zugführers führt und somit zu einem Sicherheitsgewinn beiträgt. Die Sonnenblende 1 ist bei Nichtbenutzung völlig durch eine Dachverkleidung verdeckt. Außerdem wirkt ein Cockpit des Kopfwagens allgemein etwas luftiger und übersichtlicher.

## Patentansprüche

1. Beschattungsvorrichtung für eine Frontscheibe eines Schienenfahrzeug-Kopfwagens,
wobei die Beschattungsvorrichtung einen Rahmenaufbau (2) aufweist, der zur Befestigung an einer Dachunterseite des Kopfwagens vorgesehen ist,
der Rahmenaufbau (2) eine allgemein plattenförmige Sonnenblende trägt und
die Sonnenblende mittels einer Führungseinrichtung an dem Rahmenaufbau verfahrbar befestigt ist, **dadurch gekennzeichnet, dass** die Sonnenblende eine mittlere und zwei äußere Radialführungen (3; 4; 5) aufweist, wobei die drei R adialführungen (3; 4; 5) einer vorgegebenen Krümmung der Frontscheibe Rechnung tragen.

2. Beschattungseinrichtung nach Anspruch**dadurch gekennzeichnet**, dassvon den drei Radialführungen (3; 4; 5) bezüglich des Rahmenaufbaus (2) zwei fest und eine mitfahrend ausgeführt sind.

3. Beschattungseinrichtung nach einem der Ansprüche 1 oder 2, **dadurch gekennzeichnet**, dassdie beiden äußeren Radialführungen (3; 5) fest und die mittlere (4) mitfahrend ausgeführt ist.

4. Beschattungsvorrichtung nach einem der Ansprüche 1 bis 3,
**dadurch gekennzeichnet, dass** die beiden äußeren Radialführungen (3; 5) jeweils Führungsstäbe (6; 8) aufweisen, an denen die Sonnenblende (1) jeweils lageeinstellbar aufgehängt ist.

5. Beschattungsvorrichtung nach Anspruch 4,
**dadurch gekennzeichnet, dass**
die Sonnenblende (1) jeweils dreidimensional lageeinstellbar aufgehängt ist.

6. Beschattungsvorrichtung nach einem der Ansprüche 1 bis 5,
**dadurch gekennzeichnet, dass**
der Rahmenaufbau (2) zur parallelen Ausrichtung der äußeren Führungsstäbe (6; 8) im Wesentlichen senkrecht zu der Sonnenblende (1) wirkende, höheneinstellbare Anschläge (10) aufweist.

7. Beschattungsvorrichtung nach einem der Ansprüche 1 bis 6,
**dadurch gekennzeichnet, dass**
die mittlere Radialführung (4) zum verfahren der Sonnenblende (1) zwischen einer eingefahrenen und einer ausgefahrenen Stellung einen linear angetriebenen Führungsstab (7) aufweist.

## Claims

1. Shading arrangement for a windshield of a rail vehicle leading car,
wherein the shading arrangement has a frame structure (2) which is provided for fastening to a roof underside of the leading car,
the frame structure (2) supports a generally panel-like sun visor, and
the sun visor is fastened in a movable manner to the frame structure by means of a guide device, **characterized in that** the sun visor has one central and two outer radial guides (3; 4; 5), wherein the three radial guides (3; 4; 5) take into account a given curvature of the windshield.

2. Shading arrangement according to Claim 1,
**characterized in that**,
of the three radial guides (3; 4; 5), two are configured in a fixed manner with respect to the frame structure (2) and one is configured such that it moves conjointly with the frame structure (2).

3. Shading arrangement according to either of Claims 1 and 2,
**characterized in that**
the two outer radial guides (3; 5) are configured in a fixed manner and the central radial guide (4) is configured such that it moves conjointly.

4. Shading arrangement according to one of Claims 1 to 3,
**characterized in that**
the two outer radial guides (3; 5) each have guide rods (6; 8) on which the sun visor (1) is mounted in each case such that its position can be adjusted.

5. Shading arrangement according to Claim 4,
**characterized in that**
the sun visor (1) is mounted in each case such that its position can be adjusted in three dimensions.

6. Shading arrangement according to one of Claims 1 to 5,
**characterized in that**,
in order to orient the outer guide rods (6; 8) in a parallel manner, the frame structure (2) has height-adjustable stops (10) that act in a manner substantially perpendicular to the sun visor (1).

7. Shading arrangement according to one of Claims 1 to 6,
**characterized in that**,
in order to move the sun visor (1) between a retracted position and an extended position, the central radial guide (4) has a guide rod (7) that is driven in a linear manner.

## Revendications

1. Dispositif d'ombrage pour une vitre avant d'une voiture de tête de véhicule ferroviaire,
dans lequel le dispositif d'ombrage a une structure ( 2 ) en cadre qui est destinée à se fixer à un côté inférieur de toiture de la voiture de tête, la structure ( 2 ) en cadre portant un écran solaire, d'une manière générale en forme de plaque, et
l'écran solaire est fixé de manière déplaçable à la structure en cadre au moyen d'un dispositif de guidage, **caractérisé en ce que** l'écran solaire a un guidage ( 3 ) radial médian et deux guidages ( 4 , 5 ) radiaux extérieurs, les trois guidages ( 3 , 4 , 5 ) radiaux tenant compte d'une courbure donnée à l'avance de la vitre avant.

2. Dispositif d'ombrage suivant la revendication 1, **caractérisé en ce que** des trois guidages ( 3 , 4 , 5 ) radiaux deux sont fixes par rapport à la structure ( 2 ) en cadre et l'un se déplace avec elle.

3. Dispositif d'ombrage suivant l'une des revendications 1 ou 2, **caractérisé en ce que** les deux guidages ( 3 , 5 ) radiaux extérieurs sont fixes et le guidage ( 4 ) médian se déplace.

4. Dispositif d'ombrage suivant l'une des revendications 1 à 3, **caractérisé en ce que** les deux guidages ( 3 , 5 ) radiaux extérieurs ont respectivement des barres ( 6 , 8 ) de guidage auxquelles l'écran ( 1 ) solaire est suspendu respectivement d'une manière réglable en position.

5. Dispositif d'ombrage suivant la revendication 4, **caractérisé en ce que** l'écran ( 1 ) solaire est suspendu d'une manière réglable en position respectivement suivant trois dimensions.

6. Dispositif d'ombrage suivant l'une des revendications 1 à 5, **caractérisé en ce que** la structure ( 2 ) en cadre a, pour l'orientation parallèle des barres ( 6 , 8 ) de guidage extérieures, des butées ( 10 ) réglables en hauteur et agissant sensiblement perpendiculairement à l'écran ( 1 ) solaire.

7. Dispositif d'ombrage suivant l'une des revendications 1 à 6, **caractérisé en ce que**
le guidage ( 4 ) radial médian a une barre ( 7 ) de guidage entraînée linéairement pour le déplacement de l'écran ( 1 ) solaire entre une position escamotée et une position déployée.
